# EUROPEAN PATENT APPLICATION

(11) **EP 4 789 852 A1**
(43) Date of publication of application: **12.08.2026**
(21) Application number: 25157051.1
(22) Date of filing: 11.02.2025
(51) Int. Cl.: B29C 70/54, B29C 70/30, B32B 3/30, B32B 3/26, B32B 38/04, B32B 3/10, B64C 1/06

(54) **METHOD FOR PRODUCING A BLANK FOR DEFORMATION INTO A COMPONENT PART, AND BLANK FOR MANUFACTURING A COMPONENT PART**

(71) Applicant: AIRBUS Operations GmbH, 21129 Hamburg (DE)
(72) Inventor: Vichniakov, Alexei, 21129 Hamburg (DE)
(74) Representative: Airbus Germany

(57) **Abstract**

Disclosed is a method for producing a blank 10 for deformation into a component part 100. Therein, a first section A, B, C, D, E of a sheet 1 made of a fibre reinforced composite material is designated to after the deformation become a first portion P₁, P₂, P₃, P₄, P₅ of the component part 100, and a second section A, B, C, D, E of the sheet is designated to become a second portion P₁, P₂, P₃, P₄, P₅ of the component part 100. A slit pattern is generated, within the sheet 1, whose geometry in the first section A, B, C, D, E is different from its geometry in the second section A, B, C, D, E.

Further disclosed are a manufacturing method for manufacturing a component part 100, and a blank 10 for deformation into a component part 100.

## Description

The present invention concerns a method for producing a blank designated to be deformed for becoming a component part, and a manufacturing method for manufacturing a component part. The invention further concerns a blank for deformation into a component part.

Component parts made of a composite material are often manufactured from a blank which is deformed into the required shape. Such blank is typically made of a fibre-reinforced polymer matrix. In particular, conventional blanks may be made of a sheet moulding compound (SMC) material comprising a plurality of chopped fibres, or of a pre-preg which may contain continuous fibres and/or a woven fabric. Compared to each other, an SMC material features an improved formability, whereas a pre-preg has superior mechanical performance.

To provide a blank exhibiting both advantageous mechanical properties and an improved drapability, a material known as "TORAYCA^{®} ET40" has been proposed which is made from a unidirectional thermoset pre-preg material processed by introducing, regular slits into a tape of the pre-preg material, thereby cutting the fibre material included therein and thus creating regularly arrayed unidirectional fibre bundles. According to https://www.cf-composites.toray/products/thermoset/others/extensible.html, the application of slits improves the deformability. However, it reduces the mechanical properties of produced parts.

It is an object of the present invention to facilitate fabrication of improved component parts, in particular of component parts to be integrated in a vehicle such as an aircraft.

The object is achieved by a method according to claim 1, by a manufacturing method according to claim 10, and by a blank according to claim 11. Advantageous embodiments are disclosed in the dependent claims, in the description, and in the figures.

A method according to the present invention serves to produce a blank adapted to be deformed (e.g., by stamp forming) into a component part, i.e., to be deformed so as to become - possibly after further steps such as hardening, trimming, and/or deburring - the component part. For instance, the component part may be structural part of a vehicle, in particular of an aircraft. According to specific examples, the component part may be at least a part of an aircraft's frame or stringer (respectively of a fuselage reinforcement structure), or of an aircraft's door surround frame, window frame, floor structure, bulkhead, or operational box.

The method comprises designating a first section of a sheet of a fibre reinforced composite material to after the deformation constitute a first portion of the component part, and further designating a second section of the sheet to after the deformation constitute a second portion of the component part. The designating of first and second section may preferably be carried out automatically, such as based on an intended three-dimensional shape of the component part, in particular based on a three-dimensional digital model of at least a portion of the component part.

The method further comprises generating a slit pattern comprising one or various slits within the sheet. Therein, a geometry of the slit pattern in the first section is different from a geometry of the slit pattern in the second section.

As is to be understood, the blank produced by way of the method thus is made of the sheet, and said deformation of the blank thus goes along with a deformation of the sheet.

A blank according to the present invention is designated to be deformed (e.g., by stamp forming) into a component part such as, for instance, a structural part of a vehicle, in particular of an aircraft. According to specific examples, the component part may be at least a part of an aircraft's frame or stringer (respectively of a fuselage reinforcement structure), or of an aircraft's door surround frame, window frame, floor structure, bulkhead, or operational box.

The blank is made of a sheet of a fibre reinforced composite material, the sheet comprising a first section and a second section and exhibiting a slit pattern whose geometry in the first section is different from its geometry in the second section.

As is to be understood, the method according to the present invention may comprise designating at least one further section of the sheet to after the deformation constitute a (respective) further portion of the component part. The slit pattern in such further portion may then be generated so as to have a geometry which is different from both its geometry in the first section and its geometry in the second section. Analogously, the sheet the blank according to the present invention is made of may comprise at least one further section, wherein the slit pattern may have a geometry which in the at least one further section is different from both its geometry in the first section and its geometry in the second section.

In each of the first and the second section (and, if applicable any further section), the slit pattern is preferably regular, thus exhibits a regular (respective) slit distribution. The first and the second section (and, if applicable, any further section) are preferably (pairwise) disjoint.

The slit pattern may include a plurality of hatched and/or crosshatched (straight or bent) slits. Additionally or alternatively, the slit pattern may include at least one continuous slit running along an intricate (e.g., meandering, zigzagging, looped and/or spiralled) curve.

By virtue of the slit pattern depending, in its geometry, on a respective section of the sheet, the present invention advantageously facilitates establishing a degree of deformability of the respective section in accordance with a shape of a respective portion the section will constitute, after the deformation, in the component part. Thereby, an advantageous trade-off between a deformability of the blank in the respective section on the one hand, and mechanical properties of the resulting component part on the other hand can be achieved. As a consequence, a manufacture of component parts having an increased performance is facilitated.

In particular, the present invention facilitates applying slits only locally to an area which will be deformed by a forming process, and to apply different levels of the slitting depending on the required deformation in the local areas of the respective part to be produced.

In particular, a surface of the second portion of the component part may advantageously exhibit a curvature which is tighter than a curvature of a surface of the first portion (or vice versa). The geometry of the slit pattern in the respective section may then provide for an increased deformability of the second section as compared to a deformability of the first section (or, in the reversed case, vice versa).

According to advantageous embodiments of the present invention, the slit pattern may be at least partially cut mechanically into the sheet.

Additionally or alternatively, at least some slit/s of the slit pattern may be at least partially laser-cut into the sheet.

Laser-cutting is well established for materials such as metal and glass. With respect to fibre reinforced composite materials, it is known in the art for trimming cured composite materials, cutting semi-finished products (such as pre-pregs, preforms, fabrics, or non-crimp fabrics), drilling, and perforating.

Generating, in accordance with said embodiments of the present invention, the slit pattern at least partially by way of laser-cutting facilitates a simplified alignment of the slit/s, a highly flexible and automatable, force free application of the slit pattern into the sheet while avoiding tool wear, delamination, thermal degradation, and a complex water circuit handling. Moreover, the slit pattern being laser-cut into the sheet is characterised by highly accurate cutting edges which implicate a precisely predictable deformation behaviour of the blank.

According to advantageous embodiments of the present invention, one of the first and the second section is devoid of any portion of a slit of the slit pattern; as is to be understood, absence of any slit portion is considered herein as a specific, namely void geometry of the slit pattern in the respective section, and due to the geometry of the slit pattern being different in the first and the second section, such void geometry implies that the respective other one of the first and the second section includes at least a portion of at least one slit of the slit pattern.

Be thus generating the slit pattern missing out said one of the sections (thus with a void geometry in said section), particularly advantageous mechanical properties are preserved in this section which may require a low deformability, such as due to an essentially flat shape of the associated portion (of the component part) the respective section is designated to become after the deformation.

Alternatively, each of the first and the second section may comprise at least a (respective) portion of at least one (possibly respective) slit of the slit pattern. In this case, the respective geometry of the slit pattern in the first and the second section may differ from each other in a respective depth of one or various or all slits respectively formed in the first and the second section; in a mean depth of slits respectively formed in the first and the second section; in a respective length of one or various or all slits respectively formed in the first and the second section; in a mean length of slits respectively formed in the first and the second section; in a respective shape of one or various or all slits respectively formed in the first and the second section; in an arrangement of various slits or slit portions relative to each other; and/or in a size of a maximum slit-free circular area existing within the respective section (which thus relates to a slit density respectively existent in the first and the second section).

By means of these differences in geometries, a customised, in each case appropriate degree of deformability of the respective sections may be established.

The method according to the present invention may further comprise producing the sheet. The producing may comprise tape slitting and/or cutting at least one layer of a polymer matrix. Additionally or alternatively, producing the sheet may comprise carrying out at least one step of automated fibre placement. In the latter case, said generating the slit pattern may be carried out after at least one step of the automated fibre placement.

According to specific embodiments, the method may comprise producing the sheet to include a laminate of various layers which may be of a (same or respective) polymer matrix material, and/or one or more of which may preferably be fibre reinforced. Preferably, at least two of such layers may differ from each other at least in an orientation of fibres they respectively include. The sheet a blank according to the present invention is made of may analogously comprise a laminate of various layers. At least two of these layers may be made of a same or respective polymer matrix material and/or may differ from each other at least in an orientation of fibres they respectively include.

In these embodiments, the slit pattern may be generated in at least two of the layers, possibly (if applicable) subsequent to a respective automated fibre placement onto one or both of these layers.

In particular, the slit pattern may be at least partially generated after stacking the layers; in this case, at least some of the slits of the slit pattern may preferably be generated so as to penetrate at least 50% of a thickness of the laminate or even to entirely penetrate the laminate.

Additionally or alternatively, the slit pattern may be at least partially generated prior to stacking the layers and/or during a process of stacking the layers; in these cases, at least some of the slits of the slit pattern may preferably penetrate the entire depth of a respective layer.

In embodiments where the sheet includes a laminate of various layers, at least two of the layers may differ from each other at least in a respective arrangement of one or various slits of the slit pattern these layers respectively include. For example, said at least two layers may differ from each other at least in a respective (mean) depth, (mean) length, shape, and/or slit arrangement (relative to each other) of the slit pattern's slits they respectively include, and/or in a respective size of a maximum slit-free circular area existing within the respective layer.

In embodiments of a blank (according the present invention) made of a sheet comprising a laminate of various layers, the slit pattern may analogously include slits penetrating at least 50% of a thickness of the laminate or even penetrating the entire laminate. Additionally or alternatively, it may comprise slits entirely penetrating (possibly only) individual layers of the laminate, wherein at least two layers of the blank may may differ from each other in their slits in the ways mentioned above.

The method according to the present invention may further comprise tailoring the blank from the sheet. In such case, the tailoring may comprise punching out the blank from the sheet, and/or cropping its contour. According to advantageous embodiments, the tailoring may be carried out by laser-cutting an outline of the blank; such procedure advantageously facilitates a highly flexible and automatable, force free tailoring while avoiding tool wear, delamination, thermal degradation, and a complex water circuit handling. Tailoring the blank by way of laser-cutting is particularly advantageous in embodiments where also the slit pattern is generated in this way, as mentioned above.

In these embodiments comprising tailoring the blank, the generation of the slit pattern may preferably be carried out at least partially before initiation of said tailoring, at least partially simultaneously with the tailoring, at least partially in turn with at least two steps of said tailoring, and/or at least partially after completion of the tailoring.

A manufacturing method according to the present invention serves for manufacturing a component part. For instance, the component part may be a structural part of a vehicle, in particular of an aircraft. According to specific examples, the component part may be at least a part of an aircraft's frame or stringer (respectively of a fuselage reinforcement structure), of a rib or spar of a wing, or of an aircraft's door surround frame structure, window frame, floor structure, bulkhead, or operational box.

The manufacturing method comprises producing a blank of the component part by applying a method for producing a blank according to an embodiment of the present invention. The manufacturing method further comprises stamp forming the component part from the blank. The manufacturing method may additionally comprise trimming and/or deburring the stamp formed blank, and/or applying a non-destructive test to the stamp formed blank/ component part.

According to advantageous embodiments of the present invention, the fibre reinforced composite material the sheet is formed of comprises at least one thermoset material (such as an epoxy matrix, for example) and/or at least one thermoplastic material (such as PEEK, PEKK, PAEK, LM PAEK, PPS, PA, PA66, PEI or PPS, for instance). The reinforcing fibre material of the sheet may include a unidirectional fibre and/or a fabric. It may include one or various carbon fibre/s, glass fibre/s, aramid fibre/s and/or other synthetic and/or natural (e.g., flax and/or cotton) fibre/s.

The first and/or the second section may preferably include a convex zone (such as a circular area or a rectangle) having surface area of at least 16cm², at least 25cm², or at least 100cm², for instance.

In what follows, a preferred embodiment of the present invention is explained with respect to the accompanying drawings. As is to be understood, the respective features are depicted as examples only, may be facultative and/or combined in a manner different than that depicted.

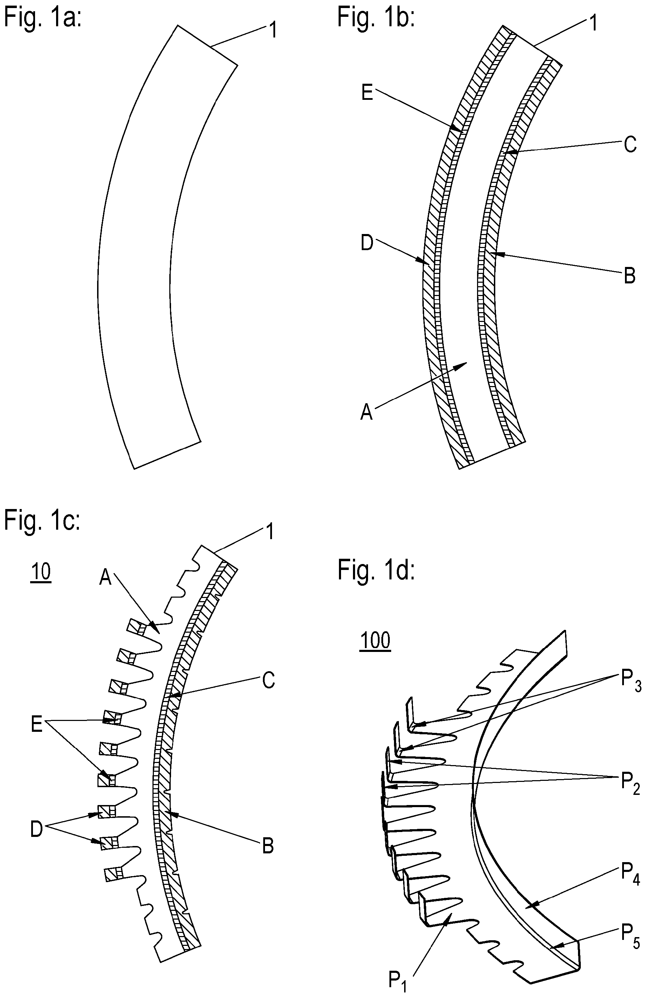

Shown is schematically in
- Fig. 1a:: sheet a blank is to be produced from by applying a method according to the present invention;
- Fig. 1b.: the sheet of Fig. 1a during application of the method;
- Fig. 1c:: a blank according to an embodiment of the present invention, produced from the sheet shown in Figures 1a, 1b; and
- Fig. 1d:: a component part manufactured from the blank shown in Fig. 1c.

Figures 1a - 1c in conjunction illustrate method for producing, in accordance with the present invention, a blank 10 (shown in Figure 1c) from a sheet 1 of a fibre reinforced composite material. The sheet 1 is depicted, in Figured 1a - 1c, in a top view.

Figure 1d completes the demonstration given by Figures 1a to 1c to a visualisation of a manufacturing method according to the present invention. Indeed, said Figure 1d depicts, in a perspective view, a component part 100 produced by deforming the blank 10, such as by way of stamp forming, possibly followed by at least one step of trimming and/or deburring (not shown) and/or a non-destructive test.

In the exemplary case illustrated, the component part 100 is a portion of a frame to be used in constructing a reinforcement structure (not shown) of an aircraft's fuselage.

Figure 1a shows the sheet 1 as just slit from a tape (not shown).

In the situation illustrated in Figure 1b, the sheet 1 has been divided in pairwise disjoint sections A, B, C, D, E in accordance with a shape of the component part 100 (see Figure 1d) into which the blank 10 (see Figure 1c) is intended to be deformed.

Indeed, and as apparent in consideration of Figure 1d, a section A is designated to become a portion P₁, a section B is designated to become a portion P₂, a section C is designated to become a portion P₃, a section D is designated to become a portion P₄, and a section E is designated to become a portion P₅. Therein, as apparent from said Figure 1d, portion P₁ is flat, portions P₂ and P₄ each are shaped as a flange arched along an outer or an inner circumference, respectively, of the component part 100, and portions P₃ and P₅ form edges, of the component part 100, in which the blank 10 has been bent about 90° relative to portion P₁.

In particular, a respective surface of portions P₃ and P₅ thus possess a curvature which is tighter than a curvature of respective surfaces of portions P₂ and P₄ which on their part are tighter than a (zero) curvature of the flat surface of portion P₁.

In the situation shown in Figure 1c, the blank 10 has been tailored by cropping its contour from the sheet 1.

In accordance with the present invention, the sheet 1 is provided, preferably by way of slitting, preferably laser-cutting, with a slit pattern (not shown) comprising at least one slit. Therein, a geometry of the slit pattern varies with the respective section A - E. That is, at least two of the sections may differ from each other in a geometry the slit pattern has in the respective section. For instance, one of the sections may exhibit no slits (such as in section A, for instance), while another one of the sections may include at least a portion of at least one slit, and/or two of the sections may differ from each other in a length, depth, shape and/or in a respective size of a maximum slit-free circular area existing within the respective section, and/or in an arrangement of various of its slits or slit portions relative to each other.

The sheet 1 and, therewith, the blank 10 may comprise a laminate of various layers (not shown) with different respective fibre orientations. Therein, different layers could be treated differently, as detailed above.

The geometry of the slit pattern preferably is generated so as to provide for a deformability, of the respective section, as appropriate for forming the component part 100. In the present case, section A designated to not be deformed but to form the flat portion P₁ may be devoid of any slit of the slit pattern. Thereby, a particularly high stability of portion P₁ can be achieved.

In sections B to E designated to be deformed so as to constitute portions P₂ to P₅, respectively, the slit pattern may be generated depending on a degree of deformation the section will be exposed to when the component part 100 is formed from the blank 10. For instance, as sections C, E are destined to undergo a heavier deformation than sections B, D, the slit pattern in one or both of these sections C, E may include deeper and/or longer slits or slit portions than in sections B, D, and/or one or both sections C, E may exhibit a higher slit density than at least one of sections B, D (in particular, a least one of sections C, E may include a maximum slit-free circular area having a smaller size than a maximum slit-free circular area included in at least one of sections B, D).

Thereby, the slit pattern may be generated so as to advantageously adjust the deformability of the blank, in the respective section, to a respective requirement without unduly exceeding it. Thus, an advantageous trade-off between a deformability and mechanical properties of the resulting component part can be achieved.

The generation of the slit pattern may at least partially be carried out before initiating the tailoring of the sheet (to produce the tailored blank depicted in Figure 1c). Additionally or alternatively, at least some step of generating the slit pattern may be carried out simultaneously with the tailoring, in turn with at least two steps of the tailoring, and/or at least partially after completion of the tailoring.

In case the method comprises producing the sheet 1 using at least one step of automated fibre placement, generating the slit pattern is carried outer after at least one step of the fibre placement.

Disclosed is a method for producing a blank 10 for deformation into a component part 100. Therein, a first section A, B, C, D, E of a sheet 1 made of a fibre reinforced composite material is designated to after the deformation become a first portion P₁, P₂, P₃, P₄, P₅ of the component part 100, and a second section A, B, C, D, E of the sheet is designated to become a second portion P₁, P₂, P₃, P₄, P₅ of the component part 100. A slit pattern is generated, within the sheet 1, whose geometry in the first section A, B, C, D, E is different from its geometry in the second section A, B, C, D, E.

Further disclosed are a manufacturing method for manufacturing a component part 100, and a blank 10 for deformation into a component part 100.

### Reference signs

- 1: sheet
- 10: blank
- 100: component part

- A, B, C, D, E: section of the sheet 1
- P₁, P₂, P₃, P₄, P₅: portion of the component part 100

## Claims

1. Method for producing a blank (10) for deformation into a component part (100), the method comprising
- designating a first section (A, B, C, D, E) of a sheet (1) of a fibre reinforced composite material to after the deformation become a first portion (P₁, P₂, P₃, P₄, P₅) of the component part (100), and a second section (A, B, C, D, E) of the sheet to become a second portion (P₁, P₂, P₃, P₄, P₅) of the component part (100), and
- generating, within the sheet (1), a slit pattern whose geometry in the first section (A, B, C, D, E) is different from its geometry in the second section (A, B, C, D, E).

2. Method according to claim 1, wherein a surface of one of the first and second portions (P₁, P₂, P₃, P₄, P₅) of the component part exhibits a curvature which is tighter than a curvature of a surface of the other one of the first and second portion (P₁, P₂, P₃, P₄, P₅).

3. Method according to one of claims 1 or 2, wherein generating the slit pattern comprises laser-cutting at least one or a plurality of slits into the sheet (1).

4. Method according to one of claims 1 to 3, wherein the slit pattern is generated such that one of the first and the second section (A) is devoid of any portion of a slit of the slit pattern.

5. Method according to one of claims 1 to 3, wherein both the first section (B, C, D, E) and the second section (B, C, D, E) includes at least a portion of at least one slit of the slit pattern, and the geometry of the slit pattern in the first section differs from the geometry of the slit pattern in the second section by at least one of
- a respective depth of one or various or all slits respectively formed in the first and the second section;
- a mean depth of slits respectively formed in the first and the second section;
- a respective length of one or various or all slits respectively formed in the first and the second section;
- a mean length of the slits respectively formed in the first and the second section;
- a respective shape of one or various slits respectively formed in the first and the second section;
- an arrangement of the respectively included slits relative to each other; and/or
- a respective size of a maximum slit-free circular area existing within the respective section.

6. Method according to one of the preceding claims, the method further comprising tailoring the blank (10) from the sheet (1), wherein said generating the slit pattern is carried out
- at least partially before initiation of said tailoring; and/or
- at least partially simultaneously with the tailoring; and/or
- at least partially in turn with at least two steps of said tailoring and/or
- at least partially after completion of the tailoring.

7. Method according to one of the preceding claims, further comprising producing the sheet (1), wherein
- at least one step of automated fibre placement is applied, wherein said generating the slit pattern is carried out after at least one step of the automated fibre placement; and/or
- the sheet is produced to include a laminate of various layers, a least two of which differ from each other at least in an arrangement of one or various slits, of the slit pattern, the at least two layers respectively include.

8. Method according to one of the preceding claims, further comprising designating at least one further section (A, B, C, D, E), of the sheet, to become a further portion (P₁, P₂, P₃, P₄, P₅) of the component part, and wherein the slit pattern's geometry in the at least one further section (A, B, C, D, E) is different from both its geometry in the first section (A, B, C, D, E) and its geometry in the second section (A, B, C, D, E).

9. Method according to one of the preceding claims, wherein the component part (100) is an aircraft's structural part, in particular at least a part of a frame, of a stringer, of a door surround frame, of a window frame, of a floor structure, of a bulkhead, or of an operational box.

10. Manufacturing method for manufacturing a component part, the method comprising
- producing a blank (10) of the component part (100) by applying a method according to one of the preceding claims, and thereafter
- stamp forming the component part (100) from the blank (10).

11. Blank (10) for deformation into a component part (100), the blank made of a sheet (1) of a fibre reinforced composite material, the sheet (10) comprising a first section (A, B, C, D, E) and a second section (A, B, C, D, E),
wherein the sheet (1) exhibits a slit pattern whose geometry in the first section (A, B, C, D, E) is different from its geometry in the second section (A, B, C, D, E).

12. Blank according to claim 11, wherein
- the slit pattern is at least partially laser-cut into the sheet (1); and/or
- the sheet includes a laminate of various layers, a least two of which differ from each other at least in an arrangement of one or various slits, of the slit pattern, the at least two layers respectively include.

13. Blank according to one of claims 11 or 12, wherein one of the first and the second section (A) is devoid of any portion of a slit of the slit pattern.

14. Blank according to one of claims 11 or 12, wherein both the first section (B, C, D, E) and the second section (B, C, D, E) includes at least a portion of at least one slit of the slit pattern, and the geometry of the slit pattern in the first section (B, C, D, E) differs from the slit pattern in the second section (B, C, D, E) by at least one of
- a respective depth of one or various or all slits respectively formed in the first and the second section;
- a mean depth of slits respectively formed in the first and the second section;
- a respective length of one or various or all slits respectively formed in the first and the second section;
- a mean length of the slits respectively formed in the first and the second section;
- a respective shape of one or various slits respectively formed in the first and the second section;
- an arrangement of the respectively included slits relative to each other; and/or
- a respective size of a maximum slit-free circular area existing within the respective section.

15. Blank according to one of claims 10 to 14, wherein the component part (100) is an aircraft structural part, in particular at least a part of a frame, of a stringer, of a door surround frame, of a window frame, of a floor structure, of a bulkhead, of a rib of a wing, of a spar of a wing, or of an operational box.
